## Europäisches Patentamt

(19) **European Patent Office**

**Office européen des brevets**

(11) Veröffentlichungsnummer: **0 029 810**
**B1**

(12) # EUROPÄISCHE PATENTSCHRIFT

(45) Veröffentlichungstag der Patentschrift:
09.04.86

(51) Int. Cl.⁴: **D 06 F 58/28,** G 05 D 23/24

(21) Anmeldenummer: **80810356.8**

(22) Anmeldetag: **19.11.80**

(54) **Verfahren und Einrichtung zur Steuerung der Temperatur in einem Trocknungsgerät, insbesondere einem Wäschetrockner.**

(30) Priorität: **27.11.79 CH 10546/79**

(43) Veröffentlichungstag der Anmeldung:
**03.06.81 Patentblatt 81/22**

(45) Bekanntmachung des Hinweises auf die Patenterteilung:
**09.04.86 Patentblatt 86/15**

(84) Benannte Vertragsstaaten:
**AT BE DE FR GB IT LU NL SE**

(56) Entgegenhaltungen:
**DE - A - 1 485 040**
**DE - A - 2 543 763**
**DE - A - 2 643 497**
**FR - A - 2 237 151**
**FR - A - 2 386 860**

(73) Patentinhaber: **Maschinenfabrik Ad. Schulthess & Co.AG., Stockerstrasse 57, CH-8002 Zürich (CH)**

(72) Erfinder: **Müller, Ernst, Klosterweg 9, CH-8808 Pfäffikon/SZ (CH)**

(74) Vertreter: **Schmid, Rudolf et al, c/o ISLER & SCHMID Patentanwaltsbureau Walchestrasse 23, CH-8006 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zur Steuerung der Temperatur in einem Trocknungsgerät gemäss dem Oberbegriff des Patentanspruchs 1 sowie eine Einrichtung zur Ausführung des Verfahrens.

In den bekannten Trocknungsgeräten wird die Betriebstemperatur mittels fest eingestellter Thermostaten, mit Regulierthermostaten oder mit elektronischen Zweipunkt-Temperaturreglern bestimmt. Die zum Trocknen des Gutes benötigte Zeit, die sogenannte Trocknungszeit, wird durch einen Zeitschalter oder durch eine auf die Restfeuchtigkeit des Gutes reagierende elektronische Steuerung begrenzt. Alle übrigen Funktionen von Trocknungsgeräten (Luftstromführung, Kondensation usw.) sind im Zusammenhang mit einer Heizleistungssteuerung ohne Belang.

Aus der DE-A-1 485 040 ist ein Zweipunkt-Regelverfahren für einen Wäschetrockner bekannt, bei welchem die Temperatur der Abluft gemessen wird und zunächst mit einer grossen Heizleistung aufgeheizt, der eigentliche Trocknungsvorgang jedoch mit verminderter Heizleistung durchgeführt wird.

Die genannten bekannten Temperatursteuerungen haben zur Folge, dass während des Betriebs, d.h. während des Trocknungsvorgangs, die Temperatur im Gerät verhältnismässig stark schwankt. Diese Temperaturschwankungen sind bei Thermostaten durch die Ausschalt- bzw. Wiedereinschalttemperatur bestimmt, bei elektronischen Zweipunkt-Temperaturreglern durch die Grösse der Schalthysterese.

Diese Temperaturschwankungen bewirken, dass periodisch eine bestimmte zusätzliche Energie benötigt wird, um das Trocknungsgut, z.B. Wäsche, sowie das gesamte für den Trocknungsvorgang erforderliche Gerätesystem aufzuheizen, und zwar von der Wiedereinschalttemperatur auf die Ausschalttemperatur.

Die vorliegende Erfindung gründet sich auf die an sich bekannte Tatsache, dass die Wasser- bzw. Feuchtigkeitsaufnahmefähigkeit der Luft temperaturabhängig ist, indem mit steigender Temperatur die Fähigkeit der Luft, Wasserdampf aufzunehmen, exponentiell zunimmt. In Anbetracht der bei bekannten Trocknungsgeräten vorliegenden, erwähnten Temperaturschwankungen einerseits und des temperaturabhängigen Verhaltens der Luft in bezug auf die Feuchtigkeitsaufnahme ist deshalb festzustellen, dass die bekannten Trockungsgeräte nur zeitweise bei der wirtschaftlichsten Temperatur, nämlich der für das betreffende Trocknungsgut höchstzulässigen Temperatur arbeiten, und zwar kurz vor und nach dem Ausschaltzeitpunkt der Heizung.

Aufgabe der Erfindung ist, eine wirtschaftlich optimale Betriebsweise eines Trocknungsgeräts zu erzielen.

Erfindungsgemäss weist das eingangs erwähnte Verfahren die im kennzeichnenden Teil des Patentanspruchs 1 angeführten Merkmale auf. Die Einrichtung zur Ausführung dieses Verfahrens ist durch die im Patentanspruch 3 angeführten Merkmale gekennzeichnet.

Durch den Vergleich des Ist-Wertes und des Soll-Wertes der Temperatur der erwärmten Luft und die entsprechende elektronische Steuerung eines kontaktlosen Steuerschalters für den Heizstrom wird ein möglichst rasches Erreichen der gewünschten Betriebstemperatur, d.h. der Trocknungstemperatur, sowie ein genaues Einhalten dieser Temperatur erzielt. Die erfindungsgemässe Steuerung der Heizleistung ermöglicht es, das Trocknungsgerät wirtschaftlicher zu betreiben. Einerseits wird weniger Heizenergie benötigt, um das gewünschte Trocknungsresultat zu erzielen, und andererseits wird der Trocknungsprozess zeitlich verkürzt. Von besonderem Vorteil ist die Erfindung in ihrer Anwendung bei Wäschetrocknern.

Die Einstellung der Soll-Temperatur mittels des Potentiometers kann manuell erfolgen, nämlich an der von aussen zugänglichen Bedienungseinheit des Trocknungsgeräts, oder durch eine im Gerät gegebenenfalls vorhandene Programmsteuerung.

Zufolge der beim Einschalten des kalten Trocknungsgeräts vorliegenden starken Abweichung des Ist-Werts der Temperatur der Trocknungsluft von deren Soll-Wert erfolgt die Aufheizung der zirkulierenden Luft vorerst mit der maximalen Heizleistung. Das genaue Einhalten der erreichten Soll-Temperatur wird dann mit einer reduzierten, dem Bedarf entsprechenden Heizleistung erzielt. Um hierzu das Tastverhältnis des Halbleiterschalters zu verändern, kann eine von der Differenz zwischen Ist- und Soll-Wert abhängige Stellgrösse erzeugt werden, welche den Halbleiterschalter nach dem Verfahren des Phasenanschnitts bzw. -abschnitts steuert. Die Stellgrösse kann aber auch Pakete von Triggerimpulsen enthalten, aufgrund derer der Halbleiterschalter jeweils entsprechende Strompakete bildet, von denen jedes in Abhängigkeit von der Grösse der Differenz zwischen Ist- und Soll-Wert mehrere Halbwellen des Netzwechselstroms umfasst.

Die erfindungsgemässe Einrichtung kann als separates Bauteil ausgebildet sein, das in ein bestehendes Trocknungsgerät einbaubar ist, um die eingangs erwähnten Nachteile der Temperaturschwankungen zu vermeiden. Andererseits kann die erfindungsgemässe Einrichtung auch als integrierter Bestandteil einer vollständigen Trocknungsgerätesteuerung ausgebildet sein.

Ausführungsbeispiele der Erfindung werden nachstehend anhand der Zeichnungen erläutert. Es zeigen:

Fig. 1 eine schematische Darstellung eines Wäschetrockners, der die erfindungsgemässe Steuereinrichtung enthält,

Fig. 2 ein Schaltschema eines Ausführungsbeispiels der erfindungsgemässen Steuereinrichtung, und

Fig. 3 eine Darstellung der durch die Steuereinrichtung der Fig. 2 dem Heizkörper des Wäschetrockners zugeführten Strompakete.

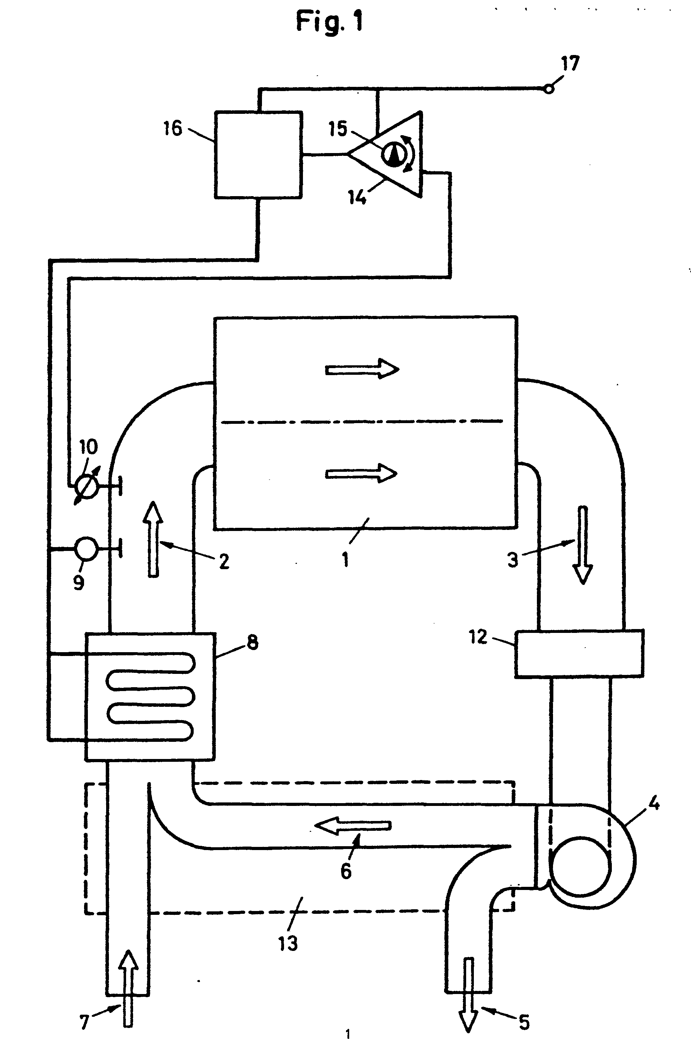

In Fig. 1 ist ein Trocknungsraum bzw. eine Trocknungstrommel 1 eines im vorliegenden Fall als Wäschetrockner ausgebildeten Trocknungsgerätes dargestellt. Zur Erzeugung eines den Trocknungsraum bzw. die Trommel 1 durchquerenden Warmluftstromes 2, 3 ist ein Ventilator 4 angeordnet. Im dargestellten Ausführungsbeispiel wird vom Ventilator 4 ein Teil des aus dem Trocknungsraum bzw. der Trommel 1 tretenden Luftstroms 3 als Abluftstrom 5 aus dem Gerät abgeführt. Die übrige Luft wird als Umluftstrom 6 einem Luftkreislauf erhalten und mit einem Frischluftstrom 7 zu einem Gesamtluftstrom vermischt. Dieser Gesamtluftstrom wird durch einen elektrischen Heizkörper erwärmt und gelangt als Warmluftstrom 2 zum Trocknungsraum bzw. zur Trommel 1.

In dem aus dem Heizkörper 8 austretenden Warmluftstrom 2 sind einerseits ein Sicherheitsthermostat 9 zur Verhinderung einer Ueberhitzung bzw. Zerstörung des Gerätes im Falle eines Versagens der nachfolgend beschriebenen Steuereinrichtung und andererseits ein Temperaturfühler 10 angeordnet. Der Temperaturfühler 10 misst die jeweilige Temperatur der zum Trocknungsraum bzw. zur Trommel 1 strömenden Luft, also den Ist-Wert der Lufttemperatur.

Die durch den Trocknungsprozess im Trocknungsraum bzw. in der Trommel 1 teilweise abgekühlte und feuchte Luft bildet den Luftstrom 3.

Der Luftstrom 3 gelangt über ein Flusenfilter 12 zum Ventilator 4, womit der Kreislauf geschlossen ist.

Bei Trocknungsgeräten, die einen Kondensator 13 aufweisen, wird mit Vorteil der gesamte, vom Ventilator 4 ausgestossene feuchte Luftstrom 3 wieder dem Heizkörper 8 zugeführt. Auf diese Weise kann durch Kondensation der Luft die Feuchtigkeit entzogen werden. Bei dieser Ausführungsform des Geräts entfallen der Abluftstrom 5 und der Frischluftstrom 7.

Bei anderen Geräten, in denen kein Umluftstrom vorgesehen ist, besteht der eingangsseitige Warmluftstrom 2 ausschliesslich aus erwärmter Frischluft, und der gesamte ausgangsseitige Warmluftstrom 3 bildet den Abluftstrom 5.

Zur erfindungsgemässen elektronischen Steuerung der Temperatur der erwärmten Luft ist eine Regelschaltung 14 angeordnet, an welche der Temperaturfühler 10 angeschlossen ist. In den Bedienungsteil des Gerätes ist ein Potentiometer 15 eingebaut, mittels welchem die Soll-Temperatur des Warmluftstroms 2 einstellbar ist. Die Regelschaltung 14 vergleicht den vom Temperaturfühler 10 gelieferten Ist-Wert mit dem durch das Potentiometer 15 eingestellten Soll-Wert und gibt an einen steuerbaren Halbleiterschalter 16 eine entsprechende Stellgrösse ab. Der Halbleiterschalter 16 ist in Reihe mit dem Sicherheitsthermostat 9 und dem Heizkörper 8 an das Wechselstromnetz 17 angeschlossen, das auch die Regelschaltung 14 sowie in nicht dargestellter Weise den Ventilator 4, den Antrieb der Trommel 1 und gegebenenfalls den Kondensator 13 über nicht dargestellte Schaltorgane speist.

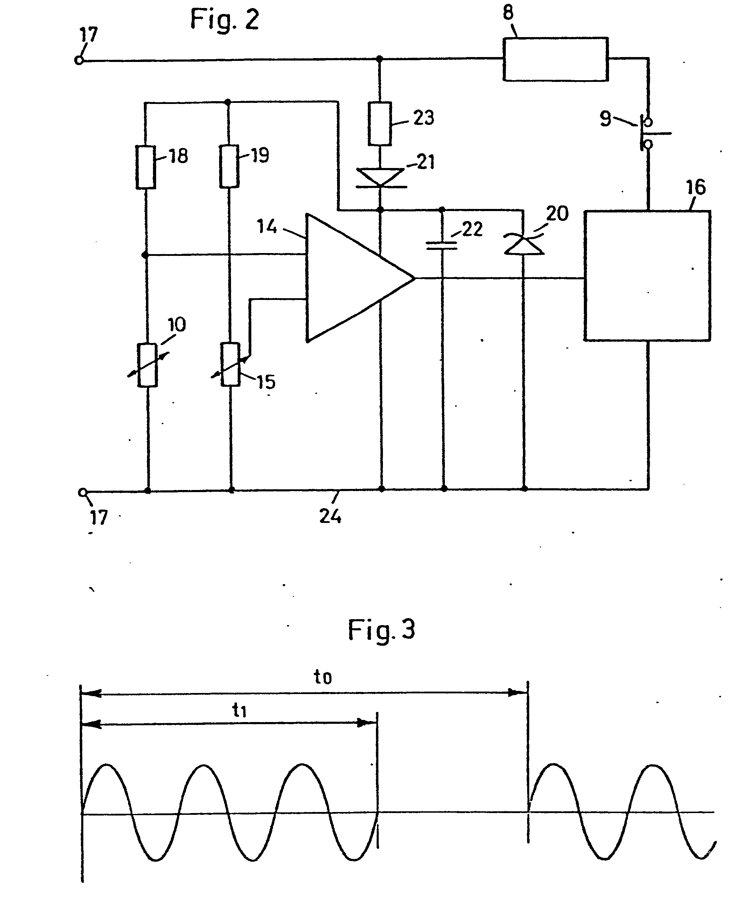

Ein Ausführungsbeispiel der erfindungsgemässen elektronischen Steuereinrichtung ist in Fig. 2 schematisch dargestellt. Daraus ist ersichtlich, dass ein an das Wechselstromnetz 17 angeschlossener Hauptstromkreis die Reihenschaltung des Heizkörpers 8, die Schaltkontakte des Sicherheitsthermostaten 9 und die Schaltstrecke des Halbleiterschalters 16 enthält. Letzterer kann beispielsweise ein Triac sein, dessen Gate-Anschluss mit dem Ausgang der Regelschaltung 14 verbunden ist. Je nach den Verdrahtungsverhältnissen im Trocknungsgerät kann der Halbleiterschalter 16 mit den übrigen Teilen der vorliegenden Steuereinrichtung zusammengebaut oder von diesen getrennt im Gerät untergebracht sein.

Zur Messung der Temperatur der erwärmten Luft und zur Erzeugung des Soll-Wertes der Temperatur ist eine Brückenschaltung vorhanden, welche einen ersten festen Widerstand 18, den Temperaturfühler 10 einen zweiten festen Widerstand 19 und das Potentiometer 15 enthält. Ein erster, aus zwei benachbarten Zweigen der Brückenschaltung bestehender Spannungsteiler enthält den ersten festen Widerstand 18 und den Temperaturfühler 10. Der Verbindungspunkt dieser beiden Bauteile liefert eine der gemessenen Temperatur entsprechende Ist-Spannung, die einem Eingang der Regelschaltung 14 zugeführt ist. Ein zweiter, aus den anderen beiden Zweigen der Brückenschaltung bestehender Spannungsteiler enthält den zweiten festen Widerstand 19 und das Potentiometer 15. Der Abgriff des potentiometers 15 liefert eine einstellbare Soll-Spannung, welche einem weiteren Eingang der Regelschaltung 14 zugeführt ist. Die Speisung dieser Brückenschaltung erfolgt durch die mit einer Referenzdiode 20 stabilisierte Speisespannung der Regelschaltung 14.

Die Regelschaltung 14 vergleicht die Ist-Spannung mit der Soll-Spannung und leitet daraus die für die Konstanthaltung der Temperatur notwendige Stellgrösse ab, die als Steuersignal vom Ausgang der Regelschaltung 14 an den Steueranschluss des Halbleiterschalters 16 gelangt.

Die Stellgrösse kann in an sich bekannter Weise die Form von Triggerimpulsen haben, die in einem bestimmten Zeitpunkt jeder Halbwelle der Netzwechselspannung auftreten und bewirken, dass der Halbleiterschalter 16 gemäss einer Phasenanschnittoder Phasenabschnittsteuerung während eines durch die Grösse der Differenz zwischen Ist- und Soll-Spannung bestimmten Bereichs jeder Halbwelle des den Heizkörper 8 speisenden Netzwechselstroms stromleitend wird. Da jedoch eine derartige Phasensteuerung ohne besondere Massnahmen zu erheblichen Störimpulsen Anlass gibt, ist die Regelschaltung 14 vorzugsweise derart ausgebildet, dass die Stellgrösse in Form von Triggerimpulspaketen über mehrere Halbwellen bzw. Perioden der Netzwechselspannung am Ausgang der Regelschaltung 14 bzw. am Steueranschluss des Halbleiterschalters 16 erscheint. Dies bewirkt dann, dass der Halbleiterschalter 16 über mehrere Halbwellen bzw. Perioden des den Heizkörper 8 speisenden Netzwechselstroms kontinuierlich stromleitend ist, d.h. der durch den Heizkörper 8 fliessende Wechselstrom die Form von aufeinanderfolgenden, mehrere Halbwellen bzw. Perioden umfassenden Strompaketen hat. Diese im Hauptstromkreis vorliegende Stromform ist in Fig. 3 dargestellt, wobei ein erstes Strompaket eine durch die Grösse der Differenz zwischen Istund Soll-Spannung am Eingang der Regelschaltung 14 bestimmte zeitliche Länge t1 hat. Die maximale Leistung wird an den Heizkörper 8 abgegeben, wenn sich die Strompakete aneinander anschliessen, also die zeitliche Länge t0 haben. Wenn mit Pmax diese maximale Leistung und mit P die reduzierte Leistung bezeichnet wird, dann ist P =

$$\frac{t1}{t0} \cdot$$

Pmax. Somit wird durch die zeitliche Länge der Strompakete die Heizenergie für die Erwärmung der Trocknungsluft bestimmt.

Die Gleichstromspeisung der Regelschaltung 14 und beschriebenen Brückenschaltung erfolgt durch das Wechselstromnetz 17 (Fig. 2) über eine Diode 21 und mittels eines Ladekondensators 22. Zur Herabsetzung der Netzwechselspannung ist der Diode 21 ein Widerstand 23 vorgeschaltet. Ferner ist, wie bereits erwähnt, die erzeugte Speisespannung mittels der Referenzdiode 20 stabilisiert. Durch die dargestellte Zusammenlegung der einen stromleitenden Elektrode des Halbleiterschalters 16 mit dem gemeinsamen Potential der Regelschaltung 14 und der erwähnten Brückenschaltung (Leitung 24) kann eine potentialtrennung zwischen dem Halbleiterschalter 16 und der Regelschaltung 14 umgangen werden.

Durch die Erfindung wird insbesondere für Textilien mit niedriger zulässiger Behandlungstemperatur von 30 - 60° C eine beträchtliche Verkürzung des Trocknungsprozesses erzielt, da die Temperatur der Trocknungsluft praktisch unverändert auf dem optimalen, d.h. maximal zulässigen Wert gehalten wird und nicht, wie bisher, Zeitintervalle wesentlich niedrigerer, unwirksamer Temperatur in Kauf genommen werden müssen.

**Patentansprüche**

1. Verfahren zur Regelung der Temperatur in einem mit einem elektrischen Heizkörper zur Erwärmung von Luft versehenen Trocknungsgerät, insbesondere einem Wäschetrockner, bei welchem die dem Heizkörper zugeführte elektrische Energie in Abhängigkeit von der gemessenen Temperatur der erwärmten Zuluft geregelt wird, dadurch gekennzeichnet, dass die dem Heizkörper zugeführte elektrische Energie analog der Differenz zwischen der gemessenen Temperatur der erwärmten Zuluft und einem einstellbaren Temperatursollwert elektronisch mindestens angenähert kontinuierlich gesteuert wird.

2. Verfahren nach Anspruch 1, dadurch gekennzeichnet, dass dem Heizkörper Strompakete zugeführt werden, die eine der dem Heizkörper im jeweiligen Zeitpunkt zuzuführenden Energie entsprechende Anzahl von Halbwellen des Netzwechselstromes umfassen, wobei die Höchstzahl der Halbwellen in einem Paket der maximalen Heizleistung entspricht.

3. Einrichtung zur Ausführung des Verfahrens nach Anspruch 1, gekennzeichnet durch einen im erwärmten Zuluftstrom (2) des Trocknungsgeräts angeordneten Temperaturfühler (10) zur Abgabe eines elektrischen Ist-Wertes der Temperatur, durch ein Einstellorgan (15) zur Erzeugung eines elektrischen Soll-Wertes der Temperatur, durch eine Vergleichs- und Regelschaltung (14) zur Bildung einer elektrischen Stellgrösse aus dem Ist- und dem Soll-Wert, und durch einen im Stromkreis des Heizkörpers (8) des Trocknungsgeräts angeordneten steuerbaren Halbleiterschalter (16), dessen Steueranschluss mit dem Ausgang der Vergleichs- und Regelschaltung (14) verbunden ist und dessen Tastverhältnis durch die Stellgrösse bestimmt ist.

4. Einrichtung nach Anspruch 3, dadurch gekennzeichnet, dass die Vergleichs- und Regelschaltung (14) dazu ausgebildet ist, den Halbleiterschalter (16) in einem durch die Stellgrösse bestimmten Zeitpunkt jeder Halbwelle des Netzwechselstromes ein- oder auszuschalten.

5. Einrichtung nach Anspruch 3, dadurch gekennzeichnet, dass die Vergleichs- und Regelschaltung (14) dazu ausgebildet ist, eine Stellgrösse in Form von Triggerimpulspaketen an den Halbleiterschalter (16) abzugeben, wobei die zeitliche Länge jedes Triggerimpulspakets von der Differenz zwischen Ist- und Soll-Wert der Temperatur abhängt und sich über mehrere Halbwellen des Netzwechselstroms erstreckt.

6. Einrichtung nach einem der Ansprüche 3 bis 5, dadurch gekennzeichnet, dass der Ist-Wert der Temperatur an einem ersten, aus einem festen Widerstand (18) und dem Temperaturfühler (10) bestehenden Spannungsteiler und der Soll-Wert der Temperatur an einem zweiten Spannungsteiler abgegriffen ist, der aus der Reihenschaltung eines weiteren festen Widerstandes (19) und eines Potentiometers (15) besteht, wobei beide Spannungsteiler (18,10,19,15) je zwei benachbarte Zweige einer Brückenschaltung bilden.

7. Einrichtung nach Anspruch 6, dadurch gekennzeichnet, dass die Brückenschaltung (18,10,19,15) durch die mittels einer Referenzdiode (20) stabilisierte Speisespannung der Vergleichs- und Regelschaltung (14) gespeist ist.

8. Einrichtung nach einem der Ansprüche 3 bis 7, dadurch gekennzeichnet, dass sie als separates Bauteil ausgebildet ist.

9. Einrichtung nach einem der Ansprüche 3 bis 7, dadurch gekennzeichnet, dass sie in die Steuer- und Schaltanlage des Trocknungsgeräts integriert ist.

**Claims**

1. Method for controlling the temperature in a drying device provided with an electrical heating body for heating air, more particularly a clothes dryer, wherein the electrical energy supplied to the heating body is controlled in dependence upon the measured temperature of the heated intake air, characterised in that the electrical energy supplied to the heating body is at least approximately continuously electronically controlled according to the difference between the measured temperature of the heated intake air and an adjustable nominal temperature value.

2. Method according to claim 1, characterised in that current bunches are supplied to the heating body, which comprise a number of half-waves of the alternating current of the mains corresponding to the energy which is to be supplied to the heating body at the respective point in time, the maximum number of half-waves in one bunch corresponding to the maximum heating capacity.

3. Device for carrying out the method according to claim 1, characterised by a temperature sensor (10) for transmitting an electrical actual value of the temperature which is arranged in the heated intake air stream (2) of the drying device, a setting element (15) for producing an electrical nominal value of the temperature, a comparator- and control circuit (14) for forming an electrical correcting variable from the actual and nominal values, and a controllable semi-conductor switch (16) which is arranged in the. circuit of the heating body (8) of the drying device, the control terminal of which is connected to the output of the comparator- and control circuit (14) and the keying ratio of which is determined by the correcting variable.

4. Device according to claim 3, characterised in that the comparator- and control circuit (14) is designed so as to switch the semi-conductor switch (16) on or off at a point in time in each half wave of the alternating current of the mains determined by the correcting variable.

5. Device according to claim 3, characterised in that the comparator- and control circuit (14) is designed so as to transmit a controlling variable in the form of trigger impulse bunches to the semi-conductor switch (16), the duration of each trigger impluse bunch being dependent upon the difference between the actual and nominal values of the temperature and extending over a plurality of half waves of the alternating current of the mains.

6. Device according to any one of claims 3 to 5, characterised in that the actual value of the temperature is measured on a first voltage divider comprising a fixed resistance (18) and the temperature sensor (10), and the nominal value of·' the temperature is measured on a second voltage divider, which comprises the series connection of a further fixed resistance (19) and a potentiometer (15), both voltage dividers (18, 10, 19, 15) forming two adjacent branches of the bridge circuit in each case.

7. Device according to claim 6, characterised in that the bridge circuit (18, 10, 19, 15) is supplied by the supply voltage of the comparator- and control circuit (14) which is stabilised by means of a reference diode (20).

8. Device according to any one of claims 3 to 7, characterised in that is is formed as a separate component part.

9. Device according to any one of the claims 3 to 7, characterised in that it is integrated into the control and switching arrangement of the drying device.

**Revendications**

1°) Procédé de régulation de la température dans un séchoir, en particulier un séchoir à linge, pourvu d'un élément de chauffage électrique devant chauffer de l'air, l'énergie électrique fournie à l'élément de chauffage étant réglée en fonction de la température mesurée de l'air d'amenée chauffé, caractérisé en ce que l'énergie électrique fournie à l'élément de chauffage est réglée électroniquement au moins approximativement en continu en analogie avec la différence entre la température mesurée de l'air d'amenée chauffé et une valeur de température prescrite ajustable.

2°) Procédé selon la revendication 1, caractérisé en ce que l'élément de chauffage reçoit des paquets de courant qui comprennent un nombre de demi-ondes du courant alternatif de secteur correspondant à l'énergie à fournir à l'élément de chauffage à chaque instant considéré, le nombre maximum de demi-ondes d'un paquet correspondant à la puissance de chauffage maximale.

3°) Agencement pour mettre en oeuvre le procédé selon la revendication 1, caractérisé en ce qu'il comprend une sonde de température (10) placée dans le courant d'air d'amenée (2) du séchoir, devant délivrer une valeur électrique correspondant à la température instantanée, un organe d'ajustement (15) devant fournir une valeur électrique correspondant à la température prescrite, un montage de comparaison et de régulation (14) devant former une grandeur de réglage électrique à partir de la valeur instantanée et de la valeur prescrite, et un interrupteur à semi-conducteurs (16) commandé, placé dans le circuit de l'élément de chauffage (8) du séchoir, dont la borne de commande est reliée à la sortie du montage de comparaison et de régulation (14) et dont le rapport de la durée de passage du courant pendant un cycle à la durée du cycle est déterminé par la grandeur de réglage.

4°) Agencement selon la revendication 3, caractérisé en ce que le montage de comparaison et de régulation (14) est réalisé de façon à fermer ou ouvrir l'interrupteur à semi-conducteurs (16) à un instant de chaque demi-onde du courant alternatif du secteur déterminé par la grandeur de réglage.

5°) Agencement selon la revendication 3, caractérisé en ce que le montage de comparaison et de régulation (14) est réalisé de façon à délivrer à l'interrupteur à semi-conducteurs (16) une grandeur de réglage en forme de paquets d'impulsions de déclenchement, l'étendue dans le temps de chaque paquet d'impulsions de déclenchement dépendant de la différence entre la valeur instantanée et la valeur prescrite de la température et couvrant plusieurs demi-ondes du courant alternatif du secteur.

6°) Agencement selon l'une quelconque des revendications 3 à 5, caractérisé en ce que la valeur instantanée de la température est prélevée sur un premier diviseur de tension comprenant une résistance fixe (18) et la sonde de température (10), tandis que la valeur prescrite de la température est prélevée sur un second diviseur de tension qui comprend une autre résistance fixe (19) et un potentiomètre (15) en série, les deux diviseurs de tension (18,10; 19,15) constituant chacun deux branches voisines d'un montage en pont.

7°) Agencement selon la revendication 6, caractérisé en ce que le montage en pont (18, 10, 19, 15) est alimenté par la tension d'alimentation du montage de comparaison et de régulation (14), stabilisée au moyen d'une diode de tension de référence (20).

8°) Agencement selon l'une quelconque des revendications 3 à 7, caractérisé en ce qu'il est réalisé sous la forme d'un module séparé.

9°) Agencement selon l'une quelconque des revendications 3 à 7, caractérisé en ce qu'il est intégré dans l'installation de commande et de commutation du séchoir.

# Fig. 1

## Fig. 2

## Fig. 3